# EUROPÄISCHE PATENTSCHRIFT

(11) **EP 3 527 046 B1**
(45) Veröffentlichungstag und Bekanntmachung des Hinweises auf die Patenterteilung: **08.09.2021**
(21) Anmeldenummer: 17784284.6
(22) Anmeldetag: 16.10.2017
(51) Int. Cl.: H05B 45/00, H05B 47/10, H05B 45/10, H05B 47/16, G08B 15/00

(54) **SICHERHEITSVORRICHTUNG ZUR EINBRUCHSPRÄVENTION**
SAFETY DEVICE FOR BREAK-IN PREVENTION
DISPOSITIF DE SÉCURITÉ POUR LA PRÉVENTION D'EFFRACTIONS

(30) Priorität: 17.10.2016 AT 600012016; 09.02.2017 AT 501062017
(43) Veröffentlichungstag der Anmeldung: 21.08.2019
(73) Patentinhaber: Gerotech-Innovations GmbH, 1150 Wien (AT)
(72) Erfinder: WOLFINGER, Gerd, 2102 Hagenbrunn (AT)
(74) Vertreter: Patentanwälte Pinter & Weiss OG
(86) Internationale Anmeldenummer: PCT/EP2017/076286
(87) Internationale Veröffentlichungsnummer: WO 2018/073147

(56) Entgegenhaltungen:
- DE-A1-102011 084 325
- US-A- 4 970 489
- US-A1- 2015 070 658

## Beschreibung

Die gegenständliche Erfindung betrifft ein Verfahren zum Imitieren eines Schattens eines schattenwerfenden Objekts mit einer Sicherheitsvorrichtung und die Sicherheitsvorrichtung selbst.

Zur Einbruchsprävention ist im Stand der Technik vorgesehen, bei Abwesenheit von Personen innerhalb eines Gebäudes Vorrichtungen in Betrieb zu nehmen, um die Anwesenheit einer Person oder eines Tieres zu simulieren, um mögliche Einbrecher abzuschrecken. Bekannt sind "Elektronische Wachhunde" (z.B. US 4,212,007 A) mit Annäherungssensoren die Bellgeräusche wiedergeben oder TV-Simulatoren (z.B. US 5,252,947 A), die das typische Licht eines Fernsehers simulieren. Die CN 203286484 U beschreibt eine LED Beleuchtungseinheit, die ein flackerndes Licht erzeugt, beispielsweise um ein Fernsehgerät zu simulieren. Dabei werden die LEDs der Beleuchtungseinheit angesteuert, um den Flackereffekt hervorzurufen. TV-Simulatoren haben den Nachteil des indirekten Bezugs zur Anwesenheit, da man nur annimmt, dass jemand vor dem Fernsehgerät sitzt.

Automatisiertes, an den 24-Stunden Rhythmus einer Person angepasstes, Ein-und Ausschalten von Licht wird ebenso angewandt, sowie mit Bewegungsmelder kombinierte intelligente Rollladensteuerungen. Nachteilig bei derartigen Methoden ist, dass deren Abschreckungspotential in der heutigen automatisierten Zeit vergleichsweise gering ist.

Des Weiteren ist aus den Patentansprüchen der DE 10 2011 084 325 A1 bekannt, LED Projektoren einzusetzen, um menschliche oder tierische Abbilder auf ebenen oder zylindrischen Leinwänden zu projizieren. Nachteile ergeben sich aus den Installations-und Deinstallationsaufwänden der Leinwände und den hohen Kosten für diese und für die LED Projektoren. Abgesehen davon, kann man bei direkten Projektionen, die das Bild einer Person oder eines Tieres darstellen, leicht erkennen, ob es real ist, oder nicht.

In der DE 10 2009 015 466 A1 wird die Erzeugung von Licht Schatten Wechseln mittels einer steuerbaren Lichtquelle erwähnt. Durch die Steuerung der Lichtquelle sollen auch sich bewegende Schatten imitiert werden. Es fehlt jedoch, abgesehen von der Verwendung einer Lichtquelle mit LED Lampen, jeglicher Hinweis, wie dieses Ziel konkret realisiert werden soll.

Aus der WO 2009/081382 A1 geht eine Beleuchtungseinheit mit einer matrixförmigen Anordnung von LEDs beschrieben, die der Beleuchtung eines Bauwerks dient. Die LED können einzeln und unabhängig voneinander angesteuert werden, um die gewünschte Beleuchtung zu erzeugen.

Die US 4,970,489 A beschreibt ein Gerät zur Anwesenheitssimulation bei dem eine bewegliche Blende vor einer stationären Lichtquelle bewegt wird, um durch die Blende einen bewegten Schatten zu erzeugen. Die Möglichkeiten für die Erzeugung eines bewegten Schattens sind damit äußerst limitiert.

Die Aufgabe der Erfindung ist es, eine Sicherheitsvorrichtung und ein Verfahren zu schaffen, die es ermöglichen, mit einfachsten, kostengünstigsten Mitteln die Anwesenheit von Mensch oder/und Tier in einem Gebäude realistisch darzustellen und zu imitieren.

Diese Aufgabe wird gelöst durch eine Vorrichtung nach den Merkmalen der angeführten Vorrichtungs- und Verfahrensansprüchen. Das von den Lichtquellen abgestrahlte Licht leuchtet eine angestrahlte Fläche gleichmäßig aus. Wenn nun eine Gruppe benachbarter Lichtquellen in ihrer Intensität gegenüber der Intensität des abgestrahlten Lichtes von Lichtquellen außerhalb der zumindest einen Gruppe reduziert wird, kann auf sehr einfache Weise ein realitätsnaher Schatten an der angestrahlten Fläche simuliert werden, womit auf einfache Weise eine Schattenwirkung erzeugt werden kann. Die Zusammenfassung von nebeneinander angeordneten Lichtquellen ermöglicht es auch, diese gemeinsam in der Intensität zu regeln, was die Steuerung der Lichtquellen erleichtert.

Ein dynamischer Schatten kann erfindungsgemäß sehr einfach erzeugt werden, wenn weitere Lichtquellen zur zumindest einen Gruppe hinzugefügt und/oder Lichtquellen der zumindest einen Gruppe aus dieser entfernt werden und dabei die Intensität des abgestrahlten Lichtes einer hinzugefügten Lichtquelle reduziert wird und die Intensität einer entfernten Lichtquelle erhöht wird. Damit können auf einfache Weise Effekte wie eine Bewegung des Schattens, ein größer oder kleiner werdender Schatten oder ein von einer Kerze erzeugter Schatten simuliert werden. Das ermöglicht besonders realitätsnahe Schattensimulationen.

Die Steuerung der Sicherheitsvorrichtung kann erheblich vereinfacht werden, wenn eine matrixförmige Anordnung aus einer Mehrzahl von Spalten von Lichtquellen und einer Mehrzahl von Reihen von Lichtquellen besteht, und der zumindest einen Gruppe alle Lichtquellen einer Spalte zugeordnet werden.

Der Schatten kann noch realitätsnäher simuliert werden, wenn die Intensität des abgestrahlten Lichtes der Lichtquellen der zumindest einen Gruppe gemäß einer Glockenkurve gesteuert wird, wobei eine oder mehrere Lichtquellen im Zentrum der Gruppe mit der geringsten Intensität abstrahlen und die Intensität des abgestrahlten Lichtes der daran anschließenden Lichtquellen gemäß der Glockenkurve verlaufend zunimmt. Auf diese Weise können harte Übergänge an der Grenze des simulierten Schattens vermieden werden.

Die Steuerung kann auch vereinfacht werden, wenn mehrere Lichtquellen der Gruppe in der Intensität des abgestrahlten Lichtes gemeinsam und gleich gesteuert werden.

Die Flexibilität der Sicherheitsvorrichtung in den Möglichkeiten der Schattensimulation kann erhöht werden, wenn alle Lichtquellen der Gruppe in der Intensität des abgestrahlten Lichtes einzeln und unabhängig voneinander gesteuert werden.

Eine einfache Anpassung auf eine vorhandene Raumbeleuchtung ist möglich, wenn zusätzlich die Lichtfarbe zumindest einer Lichtquelle der Anordnung, vorzugsweise aller Lichtquellen der Anordnung gemeinsam, gesteuert wird.

Eine weitere oder zusätzliche Möglichkeit das abgestrahlte Licht der Sicherheitsvorrichtung zu beeinflussen ist die Verwendung eines optischen Elements für eine Lichtquelle oder eine Gruppe von Lichtquellen. Damit kann das abgestrahlte Licht der Lichtquelle oder der Gruppe von Lichtquellen auf einfache Weise gebündelt oder gestreut werden.

Wenn das optische Element aus intelligentem Glas gefertigt ist, kann über das optische Element auch die Intensität des abgestrahlten Lichtes beeinflusst werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine perspektivische, schematische Darstellung einer Variante der Sicherheitsvorrichtung,
Fig.2 eine perspektivische, schematische Darstellung einer Variante des Aufbaues der Sicherheitsvorrichtung,
Fig.3a und 3b Abstrahlungswinkel der Sicherheitsvorrichtung in einer beispielhaften Ausgestaltung,
Fig.4 ein Beispiel einer Anordnung von Lichtquellen,
Fig.5 ein Beispiel einer regelmäßigen matrixförmigen Anordnung von Lichtquellen,
Fig.6 ein Aufstellbeispiel der Sicherheitsvorrichtung mit Fenster ohne Vorhang und
Fig.7 ein Aufstellbeispiel der Sicherheitsvorrichtung mit Fenster mit Vorhang oder Lamellenrollo.

Der Erfindung liegen Recherchen zugrunde, die die von außen sichtbaren, typischen Szenarien eines bewohnten Hauses widerspiegeln. Gepaart mit der Notwendigkeit einer realistischen Darstellung zur Erbringung eines hohen Abschreckungspotentials, haben sich Abbildungen in Schattenform als ideal erwiesen.

Um realistische Effekte zu erzielen, besteht die Vorrichtung aus einer Lichtquelle, die in Art und Eigenschaft so gestaltet ist, dass sie, im Gegensatz zu LED-Projektoren, ein angenehmes, warmes Licht erzeugt, das sich in der Intensität und Lichtfarbe von üblichen Lichtquellen, die zur Raum- oder Ambientebeleuchtung verwendet werden, kaum unterscheidet.

Die Recherchen haben auch ergeben, dass typische Schatten zu hoher Wahrscheinlichkeit keine 1:1 Abbildungen von Person, Tieren oder Gegenständen sind, sondern aus zufälligen Mustern bestehen, deren Erscheinungsbild durch Reflexion und Absorption des abgestrahlten Lichtes geformt wird. Die Kanten eines Schattens, der z.B. beim Durchtritt einer Person und/oder Tieres durch den Lichtstrahl einer typischen Leuchtquelle eines Gebäudes entsteht, wird in den meisten Fällen an Wänden, Einrichtungen und/oder Gegenständen, unscharf abgebildet. Dieser Effekt beruht auf der Tatsache, dass die meisten Beleuchtungskörper aus keinen singulären Punktlichtquellen bestehen, sondern großflächiger aufgebaut oder aus mehreren Lichtquellen zusammengesetzt sind und meist einen hohen Abstrahlwinkel, beispielsweise von 120°, besitzen. Ein Licht aus solchen Quellen trifft aus verschiedenen Richtungen auf das schattenwerfende Objekt auf und erzeugt somit mehrere sich überlagernde Schattenbilder mit unscharfen Kanten.

Die vorliegende Erfindung nutzt diese Erkenntnisse und bildet die beschriebenen Erscheinungsbilder durch eine, in der Intensität steuerbare Anordnung aus einzelnen Lichtquellen, vorzugsweise mit davorliegendem optischen Element, wie in den Vorrichtungsansprüchen beschrieben, realistisch nach, sodass der Betrachter, beispielsweise von außen durch ein Fenster blickend, keinen Unterschied zur Realität erkennen kann.

Selbst bei längerer und ausführlicher Betrachtung der Schattenbilder von außen ist eine Unterscheidung zwischen Realität und Simulation, durch den, in den Verfahrensansprüchen beschriebenen, ausgeklügelten Algorithmus schwer möglich.

Es gibt verschiedene konstruktive und elektrische Ausführungsvarianten der Sicherheitsvorrichtung um Bewegungen von Menschen und/oder Tieren zu simulieren, wie nachfolgend beschrieben wird.

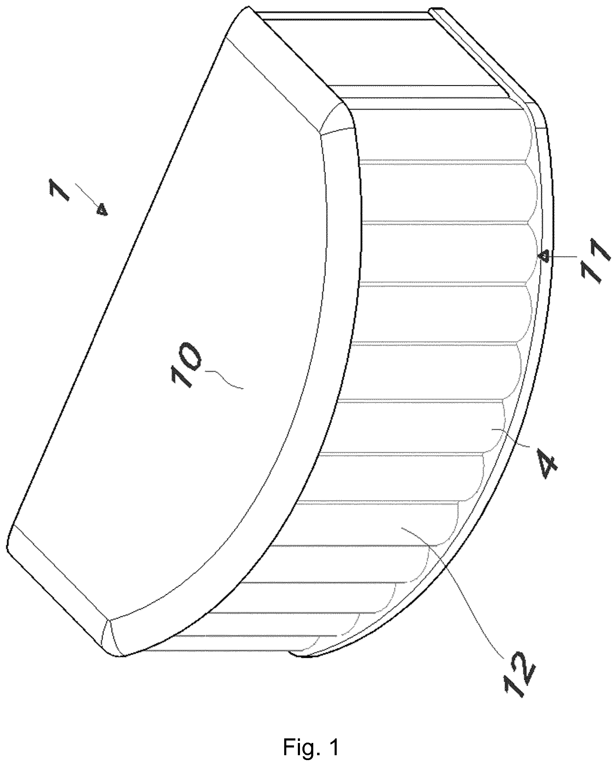

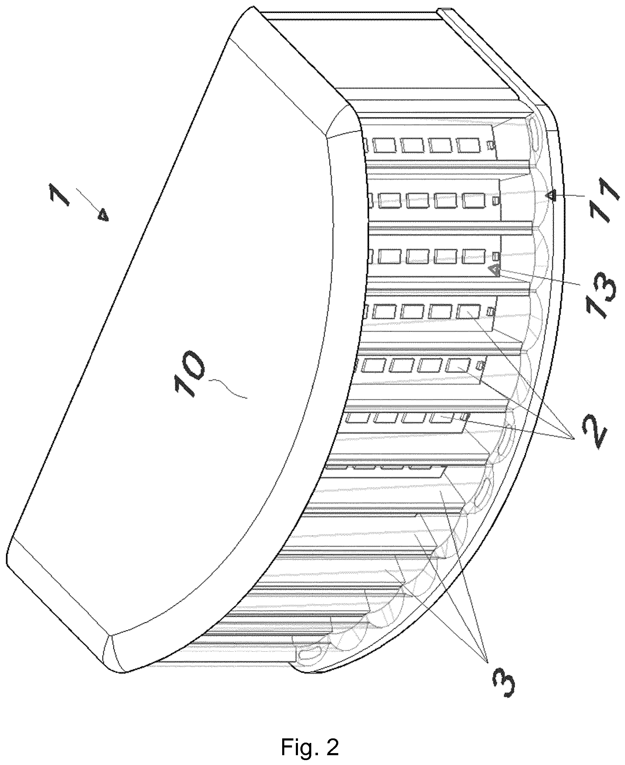

Die Sicherheitsvorrichtung 1 ist in einer vorteilhaften Ausgestaltung in Fig.1 und 2 dargestellt und umfasst ein Gehäuse 10, in dem eine Anordnung 13, vorzugsweise eine matrixförmige Anordnung, einer Mehrzahl von Lichtquellen 2 angeordnet ist, wobei die Lichtquellen 2 neben- und übereinander (auch zueinander versetzt) angeordnet sind. Eine matrixförmige Anordnung 13 von Lichtquellen 2 besteht aus einer Anzahl von nebeneinander liegenden Reihen von Lichtquellen 2, wobei in jeder Reihe eine Anzahl von Lichtquellen 2 vorgesehen ist. Hierbei müssen nicht in jeder Reihe die gleiche Anzahl von Lichtquellen 2 vorgesehen sein. Benachbarte Reihen müssen auch nicht immer den gleichen Abstand aufweisen und der Abstand zwischen benachbarten Reihen kann auch innerhalb der Reihen variieren. Benachbarte Lichtquellen 2 einer Reihe müssen auch nicht immer alle den gleichen Abstand zueinander haben. In einer gleichmäßigen Anordnung (wie in Fig.2 gezeigt) wird die matrixförmige Anordnung 13 von Lichtquellen 2 durch eine Anzahl von nebeneinander liegenden Reihen und einer Anzahl von nebeneinander liegenden Spalten von Lichtquellen 2 gebildet. Dabei sind die Lichtquellen 2 einer Reihe und einer Spalte in der gleichmäßigen Anordnung vorzugsweise auch regelmäßig beabstandet angeordnet.

Das Gehäuse 10 ist im Bereich der Anordnung 13 von Lichtquellen 2 natürlich transparent, damit Licht von der Sicherheitsvorrichtung 1 abgestrahlt werden kann. Vorzugsweise ist eine Seitenfläche des Gehäuses 10 transparent. Als transparenter Bereich 11 wird dabei im Sinne der Erfindung insbesondere auch ein transluzenter Bereich verstanden und auch eine Ausführung, wo im Bereich der Anordnung 13 von Lichtquellen 2 das Gehäuse 10 ausgeschnitten ist. Einzelnen oder Gruppen von Lichtquellen 2, beispielsweise einer ganzen Spalte von Lichtquellen 2, kann ein optisches Element 12, beispielsweise eine optische Linse 4 oder ein Linsensystem, zugeordnet sein, um das abgestrahlte Licht einer Lichtquelle 2 oder der Gruppe von Lichtquellen 2 zu bündeln oder zu streuen. In einer besonders vorteilhaften Ausgestaltung ist der transparente Bereich 11 zumindest teilweise als optisches Element 12 ausgestaltete. In einer besonders vorteilhaften Ausgestaltung weist jede Lichtquelle 2 ein eigenes optisches Element 12 auf.

Als Lichtquelle 2 dienen hauptsächlich monochrome SMD LEDs mit großer Lichtausbeute und geringem Stromverbrauch. Zum Einsatz kommen meist warme Lichtquellen (Lichtfarbe typischerweise 2700K) die ein angenehmes Licht abstrahlen. Natürlich können auch andere Typen von Lichtquellen 2, auch mit anderen Lichtfarben und Lichtcharakteristik, eingesetzt werden.

Alternativ können als Lichtquelle 2 auch mehrfarbige LEDs in allen Ausprägungen (z.B. RGB, RGBW, Bedrahtet oder SMD) zur Anwendung kommen. Mehrfarbige LEDs haben den Vorteil, dass Sie sich auf die Lichtfarbe der bereits im Gebäude befindlichen Lichtquellen anpassen können und somit höchsten Simulationsansprüchen genügen.

LEDs, oder allgemeine Lichtquellen 2, mit eingebauter Linse als optisches Element 12 sind ebenfalls eine Alternative.

Das vorzugsweise Ziel der Sicherheitsvorrichtung 1 ist es, das Licht der Lichtquellen 2 (LEDs) so an die beleuchteten Flächen zu lenken, dass einerseits eine einheitlich homogene Beleuchtung erreicht wird, andererseits aber auch einzelne Bereiche der beleuchteten Fläche weich (=keine harten Übergänge zwischen den Bereichen) ausgeblendet werden können. Dazu sind die Lichtquellen vorzugsweise so angeordnet, dass sich das von den einzelnen Lichtquellen 2 abgestrahlte Licht in einem bestimmten Abstand von der Sicherheitsvorrichtung 1 zumindest teilweise überlappt, was eine einheitliche homogene Ausleuchtung ermöglicht.

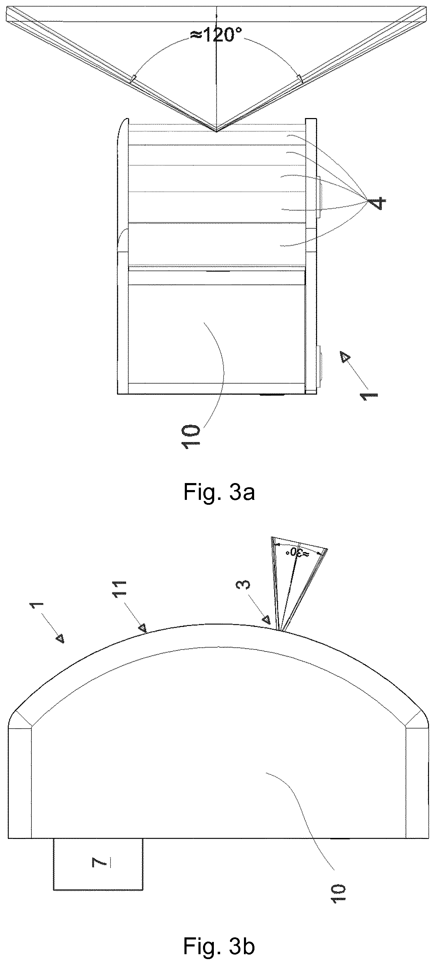

Bei einer beispielhaften Variante werden z.B. 12*5 LEDs (als konkretes Beispiel eine Lichtquelle 2) auf der Mantelfläche eines Zylinders mit etwa 10cm Radius und 5cm Höhe so montiert, dass jeweils 12 LEDs in einer Reihe nebeneinander horizontal auf einem z.B. 100° Sektor des Zylinders und 5 LEDs in jeder Spalte untereinander vertikal in einer matrixförmigen Anordnung 13 von Lichtquellen 2 Platz finden, wie in Fig.2 dargestellt. Der Abstrahlungswinkel jeder LED ohne optisches Element 12 beträgt bei den angenommenen LEDs etwa 120°. Vor jeder LED Spalte 3 befindet sich als optische Linse 4 z.B. ein konkavkonvexes Zylinderlinsensystem (in Fig.2 nur angedeutet), welches das Licht jeder LED Spalte 3 vertikal nur parallel verschiebt und daher unbeeinflusst durchlässt und horizontal auf etwa 30° Abstrahlung reduziert. Das ergibt dann insgesamt eine Abstrahlung von 120° vertikal und etwa 130° (100° Sektor + 2 x 30°/2) horizontal (siehe Fig.3a und 3b). Das optische System ist damit so konzipiert, dass die Umgebung an den relevanten Stellen im Raum bis zu einer gewissen Entfernung (z.B. 4m) gleichmäßig ausgeleuchtet wird, wenn alle LEDs mit gleicher Intensität emittieren, da sich das Licht der 12 LEDs an den beleuchteten Flächen in der Entfernung großflächig überlappt.

Bei einer weiteren Variante werden z.B. 12*5 LEDs (als konkretes Beispiel eine Lichtquelle 2) auf einem Sektor der Oberfläche einer Kugel mit etwa 10cm Radius oder einem Rotationsellipsoid so montiert, dass jeweils 12 LEDs nebeneinander horizontal in einer Reihe auf einem z.B. 100° Sektor und jeweils 5 LEDs untereinander vertikal in einer Spalte auf einem Sektor von z.B. 40°Grad in einer matrixförmigen Anordnung 13 Platz finden. Der Abstrahlungswinkel jeder LED ohne optisches System beträgt bei den angenommenen LEDs etwa 120°Grad. Vor jeder LED befindet sich dann z.B. eine konkav-konvexe Linse, die den Abstrahlwinkel jeder LED sowohl vertikal als auch horizontal in Abhängigkeit der Entfernung zwischen LED und Wand auf z.B. 30°Grad reduziert. Durch dieses System können zusätzlich auch Schatteneffekte in vertikaler Richtung realisiert werden.

Natürlich sind auch Ausführungen mit anderen Abstrahlwinkeln oder Anordnungen der Lichtquellen 2 möglich. Alternative Ausführungen können mehr oder weniger gebogene Fronten aufweisen und an verschiedene Räume angepasste Anordnungen 13 besitzen. Eine 360° Ausführung für rundum Beleuchtung und Simulation ist ebenfalls eine Variante.

In einer speziellen Variante ist es auch möglich, ein optisches Elemente 12 vor einer Lichtquelle 2 so zu gestalten, dass es das abgestrahlte Licht nicht nur ab- oder umlenken kann, sondern das durchdringende Licht auch in der Intensität modulieren kann. Ein optisches Element 12 könnte beispielsweise aus intelligentem Glas gefertigt sein, um die für realistische Schatten vorteilhafte Intensitätsmodulation zu übernehmen. Als intelligentes Glas werden Materialien bezeichnet deren Lichtdurchlässigkeit durch das Anlegen einer elektrischen Spannung oder durch Erwärmung veränderbar ist.

Alle oben genannten Lösungen haben den Vorteil, dass auf Geräte mit hoher Auflösung verzichtet werden kann. Auch die bei herkömmlichen Projektoren notwendige Bündelung des Lichts, durch ein bilderprojizierendes Medium fällt weg, womit ein stark lichtdämpfender Teil vermieden und die Sicherheitsvorrichtung 1 energieeffizienter gestaltet werden kann.

Energieeffiziente Versionen können auch ohne Lüfter betrieben werden. Dadurch ist die Sicherheitsvorrichtung 1 in dieser Form zusätzlich lautlos.

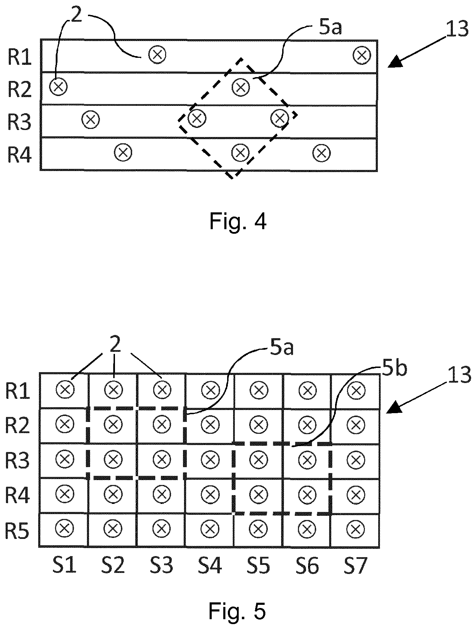

Um mit der Anordnung 13 von Lichtquellen 2 Schatten zu simulieren wird zumindest eine Gruppe 5a bestehend aus einer Mehrzahl von benachbarten Lichtquellen 2 in der Intensität des abgestrahlten Lichtes reduziert. Die restlichen Lichtquellen 2 der Anordnung 13, oder zumindest einige davon, strahlen weiterhin Licht mit höherer Intensität ab. Unter "benachbarten Lichtquellen 2" werden Lichtquellen 2 verstanden, die in der Anordnung 13 unmittelbar neben- oder übereinander, auch schräg neben- oder übereinander und auch versetzt, angeordnet sind. Das ist beispielhaft in Fig.4 für eine unregelmäßige matrixförmige Anordnung 13 mit vier Reihen Rn, n=4 und jeweils einer Anzahl von Lichtquellen 2 in jeder der Reihen Rn dargestellt. Fig.5 zeigt eine regelmäßige matrixförmige Anordnung 13 mit fünf Reihen Rn, n=5 und sieben Spalten Sm, m=7. In jeder Reihe Rn ist in jeder Spalte Sm eine Lichtquelle 2 angeordnet, somit also sieben Lichtquellen 2 in jeder Reihe Rn. In dieser Ausführung sind beispielsweise zwei Gruppen 5a, 5b benachbarter Lichtquellen 2 zur Schattensimulation vorgesehen. Damit können auf der beleuchteten Fläche zwei Schatten simuliert werden. Selbstverständlich kann eine Gruppe 5a, 5b auch eine linienförmige oder ringförmige, generell eine beliebige, Anordnung von Lichtquellen 2 umfassen, um verschiedene Schattenformen zu erzeugen.

Die Lichtquellen 2 einer Gruppe 5a, 5b können einzeln und unabhängig voneinander oder gemeinsam in der Intensität des abgestrahlten Lichtes geregelt werden. Auf jeden Fall sind die Lichtquellen einer Gruppe 5a, 5b aber unabhängig und getrennt von den Lichtquellen außerhalb der Gruppe 5a, 5b in der Intensität des abgestrahlten Lichtes regelbar. Damit kann die Intensität des abgestrahlten Lichtes der Lichtquellen 2 der Gruppe 5a, 5b reduziert werden und die Intensität des abgestrahlten Lichtes der restlichen Lichtquellen unabhängig davon mit höherer Intensität abstrahlen. Die Intensität des abgestrahlten Lichtes innerhalb einer Gruppe 5a, 5b muss aber natürlich nicht gleich sein, was bei einer Einzelregelung möglich ist. Auch außerhalb der Gruppe 5a, 5b muss die Intensität des von den Lichtquellen außerhalb der Gruppe 5a, 5b abgestrahlten Lichtes nicht gleich sein, was aber normalerweise der Fall sein wird.

In der einfachsten Ausführung wird eine Gruppe 5a, 5b aus übereinander angeordneten, benachbarten Lichtquellen verschiedener Reihen Rn von Lichtquellen 2, beispielsweise die Lichtquellen 2 einer Spalte Sm, der Anordnung 13 in Fig.5, gebildet. In dieser Ausführung kann auch schaltungstechnisch vorgesehen sein, dass alle Lichtquellen 2 einer Spalte Sm nur gemeinsam in der Intensität geregelt werden können. Eine Gruppe 5a, 5b umfasst dann zumindest alle Lichtquellen 2 einer Spalte Sm.

Die Zuordnung der Lichtquellen 2 zu einer Gruppe 5a, 5b kann sich aber auch während des Betriebes der Sicherheitsvorrichtung 1 ändern. Damit lassen sich Effekte wie mehrere Schatten, bewegte Schatten oder Schatten verschiedener Größe simulieren. Für mehrere Schatten werden beispielsweise mehrere Gruppen 5a, 5b definiert und die Intensität des abgestrahlten Lichtes der in den Gruppen 5a, 5b befindlichen Lichtquellen 2 gegenüber Lichtquellen 2 außer der Gruppen 5a, 5b reduziert. Für bewegte Schatten werden Lichtquellen 2 einer Gruppe 5a, 5b hinzugefügt und/oder Lichtquellen 2 aus einer Gruppe 5a, 5b entfernt. Die hinzugefügten Lichtquellen 2 werden dabei natürlich in der Intensität reduziert und die entfernten Lichtquellen in der Intensität erhöht. Je nachdem welche Lichtquellen 2 hinzugefügt oder entfernt werden, kann sich der Schatten in verschiedene Richtungen bewegen. Damit können auch Bewegungen wie z.B. Bücken, Hinsetzen oder Springen simuliert werden. Durch das Hinzufügen von Lichtquellen 2 in eine Gruppe 5a, 5b und/oder Entfernen von Lichtquellen aus einer Gruppe 5a, 5b kann als bewegter Schatten auch ein größer oder kleiner werdender Schatten simuliert werden. Diese Möglichkeiten können natürlich beliebig kombiniert werden.

Zur Steuerung der Intensität des abgestrahlten Lichtes kann durch eine Steuereinheit 7 die Versorgungsspannung oder der Versorgungstrom einer Lichtquelle 2 verändert werden und/oder es kann auch die Lichtdurchlässigkeit eines optischen Elementes 12 verändert werden.

Als Basis für die Steuerungen der Lichtquellen 2 (LEDs) dienen Steuereinheiten 7 mit Prozessoren, wie z.B. ATMEL 328P oder leistungsfähigere Modelle je nach Ausstattung der Sicherheitsvorrichtung 1, die beispielsweise multiplexfreie LED Treiber ansteuern, um unrealistisches Flackern zu vermeiden. Bei einem multiplexfreien Treiber bleibt die gewünschte Intensität einer Lichtquelle 2 eingestellt, beispielsweise bleibt eine Lichtquelle 2 angeschaltet, und wird nicht mit hoher Frequenz ein- und ausgeschaltet. Die Steuereinheit 7 kann dabei in der Sicherheitsvorrichtung 1 integriert sein, kann aber auch extern sein.

Die meisten Modelle der Sicherheitsvorrichtung 1 werden mit externen Schaltnetzteilen und Spannungen <24V betrieben, wobei aber natürlich auch integrierte Netzteile möglich sind.

Zur perfekten Einbindung in die zu schützende Umgebung, und um Interaktionen zu ermöglichen, kann die Sicherheitsvorrichtung 1 elektronische Schnittstellen zur Verfügung stellen, um sowohl Befehle entgegenzunehmen als auch Aktionen setzen zu können. So können zwei oder mehrere Sicherheitsvorrichtungen durch die jeweiligen Schnittstellen aneinandergekoppelt werden, um zimmer- oder stockwerkübergreifende Schattenbewegungen zu simulieren. Bevorzugte Transportmedien für diese Art der Kommunikation sind LAN/WLAN oder Bluetooth in allen Varianten. Aber auch andere gängige Datenübertragungsmöglichkeiten, wie z.B. Nutzung der sogenannten ISM-Bänder, die für häusliche Bereiche zur Verfügung stehen, sind denkbar. In Zukunft könnten auch LiFi (=Light Fidelity) Schnittstellen zur Verfügung stehen. In der einfachsten Ausführung der Schnittstellen steht für den Ausgang eine Buchse mit einem potentialfreien Kontakt zur Verfügung, der mit jeder modernen Alarmanlage kompatibel ist und als Eingang eine Buchse, mit einer dahinterliegenden PullUp oder PullDown Beschaltung, die Befehle entgegennimmt, indem man sie auf Null- (GND) oder Versorgungs- (Vcc) Potential bringt. Durch die Verwendung von Kodierungen in Form von Protokollen, kann ein einzelner Eingang gegebenenfalls gleich mehrere Befehle entgegennehmen.

Das ermöglicht das Einbinden von Bewegungssensoren, um Schatten genau dann zu generieren, wenn sich eine Person nähert. Natürlich verhindert ein Algorithmus vorzugsweise die exakte Wiederholung bei nochmaliger Aktivierung.

Die Aktivierung und Steuerung der Sicherheitsvorrichtung 1 kann durch vielseitige Möglichkeiten von externen Komponenten getriggert, autonom automatisch oder manuell erfolgen. Im Automatikmodus kann z.B. auch ein Lichtsensor die Aktivierung übernehmen.

Nach Aktivierung der Sicherheitsvorrichtung 1 werden die Lichtquellen 2 einer Gruppe 5a, 5b von Lichtquellen 2, beispielsweise einzelne Spalten 3 oder/und einzelne Lichtquellen 2 (LEDs) in der Anordnung 13, gemäß der implementierten Steuerung derart angesteuert, dass Schatten, vorzugsweise bewegte Schatten, entstehen und dabei die Schattengenerierungsintervalle realistisch bleiben.

An die Sicherheitsvorrichtung 1 kann auch eine USV (Unterbrechungsfreie Stromversorgung) angeschlossen werden, um bei Stromausfall nach kurzer Zeit automatisch in einen Kerzenlichtmodus zu wechseln, bei dem die Lichtquelle 2 nach Kerzenlichtart moduliert wird, um etwaigen Einbrechern, besonders auch in diesem Fall, Anwesenheit zu simulieren.

Als besondere Erweiterung könnten auch Netzwerk-Funktionen (z.B. Router) im Gerät angeboten werden. Durch diese Kombination kann Platz gespart und die Sicherheitsvorrichtung 1 perfekt in ein eventuell vorhandenes Netzwerk integriert werden.

In einer weiteren Alternative kann man in verschiedenster Form Einfluss auf die Mechanismen der Sicherheitsvorrichtung 1 nehmen, wenn man beispielsweise eine zugehörige App für Android oder iOS Geräte verwendet. Damit können dann z.B. einfach Vorgänge parametriert oder Zeitpläne und Trigger für die Aktivierung erstellt werden

Ergänzungen mit anderen Funktionen wie Uhr, Radio, Diskolicht, Peakmeter zur Echtzeit, Frequenzspektrumsvisualisierung, oder steuerbare Beleuchtung von 0-360°Grad sind ebenfalls denkbar.

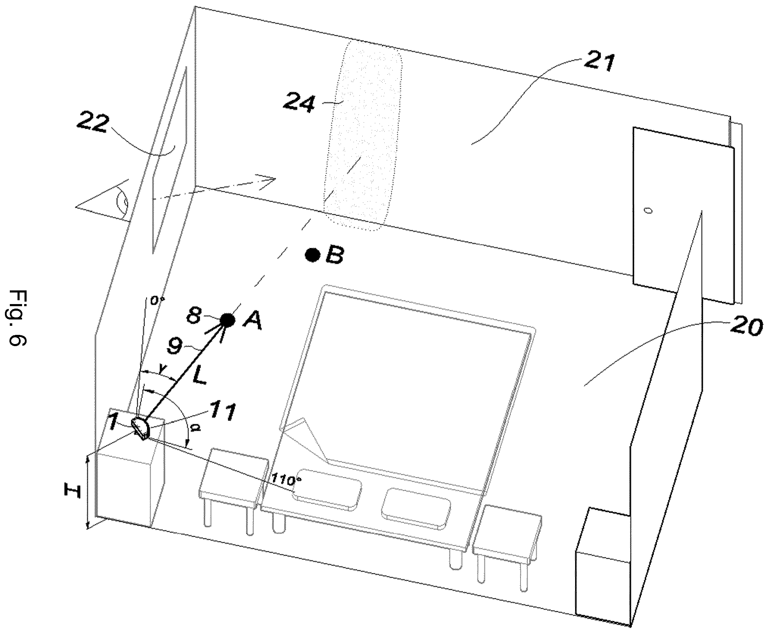

Vorzugsweise wird die Sicherheitsvorrichtung 1 in einem Raum 20 auf eine ebene, horizontale Fläche gestellt oder an die Decke oder Wand gehängt und mit dem transparenten Bereich 11 auf eine Wand 21 ausgerichtet die von außen durch ein Fenster 22, oder eine Terrassentüre oder ähnliches, sichtbar ist (Fig.6). Die Distanz und Position zur Wand 21 wird vorzugsweise so gewählt, dass die gesamte von außen einsehbare Wandfläche gleichmäßig von der Sicherheitsvorrichtung 1 ausgeleuchtet wird. Diese Distanz hängt dabei natürlich von den Abstrahlwinkeln der einzelnen Lichtquellen 2 ab und kann angegeben werden, oder kann einfach durch Ausprobieren herausgefunden werden. An der Wand 21 wird dann ein Schatten 24 erzeugt und simuliert, der von außen durch das Fenster 22 wahrgenommen wird. Natürlich sind auch andere Aufstellorte und Aufstellpositionen möglich.

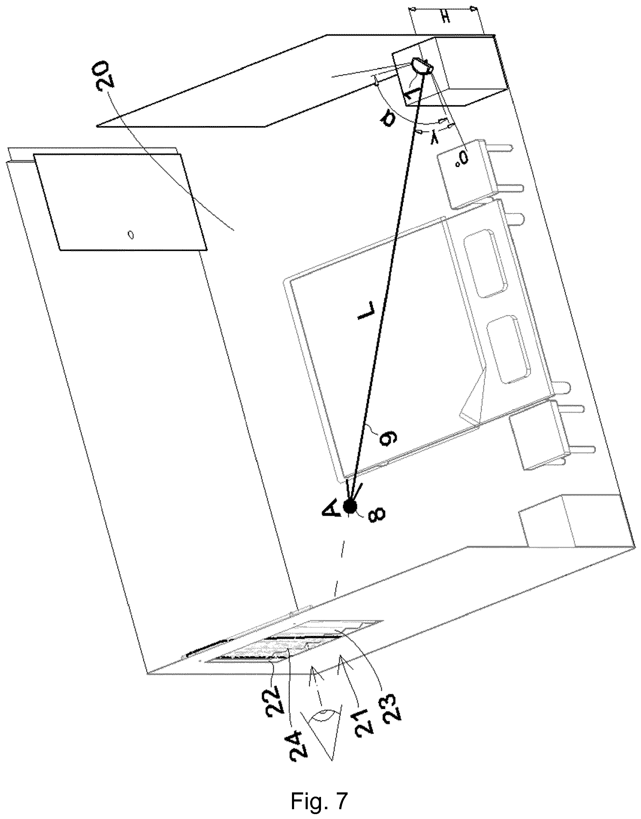

Alternativ kann die Sicherheitsvorrichtung auch auf einen blickdichten, aber schwach lichtdurchlässigen Vorhang 23 (Fig.7) oder auf ein geschlossenes Lamellenrollo, das konstruktionsgemäß ein paar Lichtstrahlen durchlässt, als Wand 21 ausgerichtet werden, solange ein direkter Blickkontakt von außen auf die Sicherheitsvorrichtung 1 vermieden wird. Der Schatten 24 wird dabei am Vorhang 23 oder am Lamellenrollo als Wand 21 erzeugt und simuliert. Dies Variante bringt (simulierte) Bewegungen besonders gut zur Geltung, da die Schatten von außen sehr gut sichtbar sind und auch aus großen Entfernungen wahrgenommen werden. Weiters ist diese Anordnung besonders interessant in Kombination mit einem elektrischen Lamellenrollo-System, mit dem einer sich von außen annähernden Person eine interaktive Reaktion auf ihre Anwesenheit vorgespielt werden kann. Diese Variante ist in den Simulationsmöglichkeiten beschrieben.

Generell stehen bei allen Anwendungen, je nach Ausführung mit oder ohne externer Eingänge, mehrere Möglichkeiten zur Verfügung. Ein "Manueller Modus" ermöglicht z.B. das Betreiben der Sicherheitsvorrichtung 1 an einer simplen Zeitschaltuhr. Ein "Automatik Modus" simuliert z.B. nach voreingestellten Algorithmen die Szenarien. Ist die Sicherheitsvorrichtung 1 zusätzlich mit Eingängen und/oder mit Ausgängen versehen, kann sie auf externe Einflüsse, wie z.B. auf Annäherung einer Person an einen Sensor, besonders realistisch reagieren oder weitere Sicherheitsvorrichtungen 1 triggern.

Bei der Annahme, dass die Sicherheitsvorrichtung 1 auf eine Wand 21, beispielsweise die Innenseite eines geschlossenen Lamellenrollos oder eines blickdichten, aber lichtdurchlässigen Vorhangs 23, ausgerichtet ist und die Schatten 24 von außen durch das Fenster 22 betrachtet werden, können z.B. folgend Situationen, gleichzeitig oder getrennt voneinander, simuliert werden.
- Ein- und Ausschalten des Lichtes im Raum
- Bewegung in horizontaler Richtung von links nach rechts oder umgekehrt
- Bewegung längs zur Strahlausbreitung (z.B.in Richtung Lamellenrollo) oder in die entgegengesetzte Richtung
- Bewegungen in vertikaler Richtung, speziell um verschiedene Höhen der Lichtquellen oder der Objekte, oder z.B. das Bücken von Personen simulieren zu können
- Bewegung von einer oder mehrere Personen und/oder Tiere.
- Bewegungen über mehrere Zimmer oder Stockwerke hinweg, bei Einsatz von mehreren Sicherheitsvorrichtungen 1
- Eine weitere, eindrucksvolle Variante ist das Simulieren sämtlicher, vorher beschriebenen Bewegungen bei Kerzenlicht. Diese Variante eignet sich hervorragend zur Einbruchsprävention in Kombination mit einer unterbrechungsfreien Stromversorgung. In diesem Fall erkennt die Sicherheitsvorrichtung 1 den Stromausfall, schaltet das Licht kurz aus, um anschließend über die unterbrechungsfreie Stromversorgung dann den Kerzenlichtmodus zu starten.
- In einer weiteren Alternative kann man in verschiedenster Form Einfluss auf die Mechanismen der Sicherheitsvorrichtung 1 nehmen, wenn man eine zugehörige App für Android oder iOS Geräte verwendet. Damit können dann z.B. Vorgänge parametriert oder Zeitpläne und Trigger für die Aktivierung erstellt werden.

Es folgen Beschreibungen von Algorithmen, die für die automatischen Szenenzusammenstellungen verantwortlich sind.

Zur Realisierung von Schattenbildern gibt es mehrere Möglichkeiten. Bei der einfachsten Variante werden beispielsweise Bewegungsrichtung, Geschwindigkeit und eventuell auch weitere Parameter wie Beschleunigung und Größe des schattenwerfenden Objekts durch Zufallsmechanismen bestimmt und auf zumindest eine Gruppe 5a, 5b von Lichtquellen übertragen. Diese Methode hat jedoch den Nachteil, dass Pfade und Objekte in Bewegung und Beschaffenheit nicht, oder nur sehr gering interaktiv an Situationen angepasst werden können. So ist es z.B. nur schwer möglich eine virtuelle Person zum Fenster gehen und dort stoppen zu lassen, wenn ein Bewegungsmelder eine sich annähernde Person registriert.

Bei einer weiteren Möglichkeit werden mehrere Bewegungsszenarien oder andere notwendigen Parameter der Schattensimulation vorberechnet bzw. vorab erstellt und die für die Ansteuerung der Lichtquellen 2, beispielsweise der zumindest einen Gruppe 5a, notwendigen Parameter in einer Tabelle abgelegt, beispielsweise in einem Speicher der Sicherheitsvorrichtung 1. Bei Bedarf wird der Inhalt der Tabelle ausgelesen und über die Anordnung 13 der Lichtquellen 2 der Sicherheitsvorrichtung 1 abgespielt. Diese Methode erspart viel Prozessorleistung, hat jedoch ebenfalls den Nachteil, dass die generierten Schatten nur bedingt interaktiv gesteuert werden können.

Eine andere Variante ermöglicht eine externe Steuerung der Anordnung 13 der Lichtquellen 2. Dazu werden beispielsweise die für die Schattensimulation oder Bewegungsszenarien notwendigen Parameter außerhalb der Sicherheitsvorrichtung 1 von externen Computern, als auch beispielsweise von mobile Geräte, wie Smartphones, erzeugt und bei Bedarf zur Sicherheitsvorrichtung 1 übertragen, wo die Anordnung 13 der Lichtquellen 2 entsprechend angesteuert wird.

Zur Realisierung realistischer Schattenbilder wird jedoch vorzugsweise ein schattenwerfendes Objekt 8 im Raum 20 angenommen und in der Sicherheitsvorrichtung 1, beispielsweise in der Steuereinheit 7, berechnet, welcher Schatten 24 von diesem schattenwerfenden Objekt 8 an der Wand 21 erzeugt wird. Dazu können intern Parameter verwendet werden, die Beschaffenheit (z.B. Größe, Form, etc.) und Bewegungen des gewünschten darzustellenden, schattenwerfenden Objekts 8 beschreiben. Die Steuerung der Sicherheitsvorrichtung 1 setzt die Einstellungen dann in Schattenbewegungen um, die durch das entsprechende Ansteuern der Lichtquellen 2 realisiert werden. Dazu werden zumindest eine Gruppe 5a, 5b von Lichtquellen, die für die Schattenerzeugung benötigten werden angesteuert, um deren Intensität des abgestrahlten Lichtes gegenüber den Lichtquellen 2 außerhalb der zumindest einen Gruppe 5a, 5b abgesenkt. Zur Erzeugung eines Schattens 24 werden gewisse Lichtquellen 2 der Sicherheitsvorrichtung 1 ausgeschaltet, oder allgemein deren Intensität gegenüber anderen Lichtquellen 2, die die Wand 21 ausleuchten, reduziert.

Je nach Ausführung der Sicherheitsvorrichtung 1 können die Parameter auch extern beeinflusst oder parametriert werden. Die Anzahl der zur Verfügung stehenden Parameter hängt von der konkreten Ausgestaltung der Sicherheitsvorrichtung 1 ab.

Bei aktivierter Sicherheitsvorrichtung 1 werden bevorzugt laufend neue Szenen für die Schatten 24 errechnet. Jede Szene kann aus Anfangs- und Endposition des schattenwerfenden Objekts 8 und der gewünschten Beschleunigung, Anfangs- und/oder Endgeschwindigkeit und Verzögerung bestehen, wobei die Anfangs- und Endposition auch gleich sein können, um ein stillstehendes Objekt 8 zu simulieren.

Als Parameter für die Algorithmen zum Simulieren des Schattenwurfs können beispielsweise dienen:
Die Definition der Gestalt des schattenwerfenden Objekts 8. Hier können beispielsweise mehrere Gestalten gespeichert sein und ausgewählt werden. Die Gestalten können auch zufällig gewählt und auch automatisch oder manuell gewechselt werden.

Ein maximaler horizontaler Abstrahlwinkel α der Sicherheitsvorrichtung 1. Der maximale Abstrahlwinkel hängt von der physikalischen Beschaffenheit der Optik der Sicherheitsvorrichtung 1 ab, wie oben beschrieben. Bei den meisten Varianten wird er bei etwa 100°Grad liegen. Ebenso könnte ein maximaler vertikaler Abstrahlwinkel parametriert werden.

Die Position des schattenwerfenden Objektes 8 im Raum 20, kann durch Winkel γ und Länge L eines Vektors 9 relativ zur Sicherheitsvorrichtung 1 angegeben werden. Der Vektor 9 verläuft vorzugsweise horizontal zur Sicherheitsvorrichtung 1. Eine mögliche Parametrierung des Winkel könnte beispielsweise einen Winkelbereich von 0-110° umfassen, wobei 0-4° für Links außerhalb des physikalisch möglichen Lichtkegels steht, 5-105° einen 100°Lichtkegel repräsentiert und 106-110° für Rechts außerhalb des Lichtkegels steht. Die Länge L kann z.B. als Wert zwischen 0-250, was für 0-500cm stehen kann, angegeben werden. 0 bedeutet z.B. kein Licht, da das schattenwerfende Objekt 8 vor der Lichtquelle 2 steht und 255 bedeutet kleinster Schatten, da das schattenwerfende Objekt 8 von der Lichtquelle 2 am weitesten entfernt ist.

Eine Montagehöhe H der Sicherheitsvorrichtung 1 definiert die Höhe H zur Lichtquelle 2. Die Höhe der Lichtquelle 2 im Raum 20 hat direkten Einfluss auf die Schattenbilder, die an der Wand 21 zu sehen ist. Beispielsweise erzeugen Deckenlampen bei einer Person im Raum 20 zu hoher Wahrscheinlichkeit niedrigere Abbilder als Tischlampen bei der gleichen Person. Mit diesem Parameter wird dieser Einfluss bei der Schattengenerierung berücksichtigt und anhand Positions-Parameter automatisch berechnet. Die Montagehöhe H kann als Wert zwischen 0-255 definiert sein, was für eine Höhe von 0-255cm stehen kann.

Die Größe des schattenwerfenden Objektes 8 beeinflusst die Größe des Schattens 24. Bei gleicher eingestellter oder errechneter Entfernung des schattenwerfenden Objektes 8 zur Sicherheitsvorrichtung 1 wird ein größerer Schatten 24 erzeugt, wenn der Parameter größer gewählt wird. Für einen großen Schatten werden mehr Lichtquellen in der zumindest einen Gruppe 5a, 5b enthalten sein, als bei einem kleineren Schatten. Auf diese Weise kann man auch die Schattengröße an die Raumgröße anpassen. So wird man bei einem kleineren Raum 20 größere Schatten wählen, weil durch die geringe Distanz zur nächsten abbildenden Fläche die Schatten 24 auch kleiner wären, wobei bei größeren Räumen die Schatten 24 kleiner gewählt werden können, da sie ohnehin aufgrund der Distanz zur nächsten abbildenden Fläche groß genug sind. Die Größe kann beispielsweise durch 0:klein, 1:mittel, 2:groß charakterisiert werden. Die Größe kann auch dynamisch verändert werden. Bei aktivierter Sicherheitsvorrichtung 1 wird die Größe laut aktueller Szene errechnet. Soll sich z.B. das Objekt 8 fiktiv von der Sicherheitsvorrichtung 1 entfernen, so wird der abzubildende Schatten 24 über den Weg kleiner. Die Größe könnte hierfür dynamisch in kleinen Stufen abgeändert werden, um diesen Effekt zur Wirkung zu bringen.

Eine Anfangsposition A und eine Endposition B kann beispielsweise durch einen jeweiligen Vektor 9 definiert werden. Ebenso kann eine Trajektorie der Bewegung des schattenwerfenden Objektes 8 von der Anfangsposition Azur Endposition B definiert werden. Ein Geschwindigkeitsparameter für die Bewegung von Anfangsposition Azur Endposition B kann definieren, wie schnell sich das Objekt 8 von der Anfangsposition A zur Endposition B bewegen soll. Die Geschwindigkeit kann als Wert in cm pro Sekunde angegeben werden. Der Wert 0 kann auch für keine Bewegung verwendet werden. Die Sicherheitsvorrichtung 1 erzeugt dann selbstständig Schatten 24 für ein schattenwerfendes Objekt 8, das sich wie parametriert von der Anfangsposition A mit der angegebenen Geschwindigkeit zur Endposition B bewegt, um von A nach B zu kommen. Dabei wird zu bestimmten, vorgegebenen Zeiten der Schatten 24 neu berechnet und durch die Ansteuerung der Lichtquellen 2 eingestellt.

Ebenso kann die Anzahl der Objekte 8 im Raum festgelegt werden. Somit kann die Anwesenheit von mehreren Personen simuliert werden. Dabei kann natürlich auch jedes einzelne Objekt 8, auch deren Bewegung, unabhängig voneinander parametriert werden.

Eine Beschleunigung des Objekts 8 kann angeben, wie schnell das Objekt 8 beschleunigt oder verzögert, wenn es seine Geschwindigkeit ändert. Hiermit können Personen simuliert werden, die sich langsam oder schnell bewegen. Bei Eintritt in den Lichtkegel kann man z.B. von einer gleichförmigen Bewegung ausgehen. Das könnte beispielsweise durch 0: Gleichförmige Bewegung, 1: Geringe Beschleunigung, 2: Hohe Beschleunigung definiert sein, wobei für die einzelnen Stufen natürlich ein Beschleunigungswert hinterlegt ist.

Es kann auch eine Anzahl permanenter Objekte definiert werden. Damit kann z.B. ein Objekt simuliert werden, das zwischen der Lichtquelle 2 und dem Fenster 22 steht, wie z.B. die Stange einer Stehlampe, die Schatten wirft.

Der Typ der Lichtquelle kann beispielsweise über die Parameter 0: normales Licht für eine normale Raumbeleuchtung, 1: Kerzenlichtsimulation durch Intensitäts- und Positionsmodulation des Schattens 24, 2-255 kann für Lichtanpassungen reserviert sein, z.B. Farbtemperatur, usw. Dadurch kann das Licht der Sicherheitsvorrichtung 1 an andere, existierende Lichtquellen 2 angepasst werden, um den Unterschied zwischen echter und simulierter Beleuchtung nochmals zu reduzieren.

Ein Parameter Anzahl der verbundenen Sicherheitsvorrichtungen, kann die Anzahl der Sicherheitsvorrichtungen 1 definieren, die die Bewegung des schattenwerfenden Objektes 8 von einer Sicherheitsvorrichtung 1 zu einer anderen übernehmen können. Das dient beispielsweise zur raumübergreifenden Simulation, bei der das Objekt 8 von einem Raum oder/und einem Stockwerk in einen anderen Raum / Stockwerk wechselt.

Selbstverständlich sind auch andere oder zusätzliche Parameter denkbar, um einen Schatten 24 zu erzeugen und zu simulieren.

Die Berechnung des Schattens 24 für ein schattenwerfendes Objekt 8 zu einem bestimmten Zeitpunkt, das sich zu diesem Zeitpunkt an einer bestimmten Position im Raum 20 befindet, kann über einfache Vektorberechnungen und einfache kinematische Zusammenhänge erfolgen. Hierfür wird nur geringe Rechenleistung der Steuerung benötigt, was ebenfalls hilft, die Sicherheitsvorrichtung 1 einfach zu halten.

Der Schatten 24 kann auch mit einer Intensitätsverteilung berechnet werden, sodass keine abrupten Intensitätssprünge auftreten, was für einen Schatten 24 unrealistisch wäre. Hierzu kann vorgesehen sein, die Intensität der an der Erzeugung des Schattens 24 beteiligten Lichtquellen 2 in der zumindest einen Gruppe 5a, 5b nach einer Glockenkurve, beispielsweise einer Gaußfunktion, zu ändern. Die geringste Intensität ist dabei natürlich im Zentrum des Schattens 24 vorgesehen und die Intensität steigt zum Rand des Schattens 24 hin gemäß der definierten Glockenkurve an. Die Intensitätsverteilung kann auch in horizontaler und vertikaler Richtung, und auch jeder anderen Richtung, separat definiert werden. Wenn auch eine Bewegung des schattenwerfenden Objektes 8 simuliert wird, dann bewegt sich auch der in der Intensität gemäß der Glockenkurve angepasste Schatten 24 in horizontaler Richtung und/oder in vertikaler Richtung, oder in einer beliebigen anderen Richtung.

Ebenso ist es vorteilhaft, wenn die Intensität der Lichtquellen 2 nicht sprungweise geändert wird, sondern kontinuierlich, oder in so kleinen Intensitätsstufen, dass ein ruckel- und flimmerfreier Schatten 24 entsteht.

Falls Kerzenlicht simuliert wird, kann der Schatten 24 mit typischer Kerzenlichtflackerfrequenz hin- und her verschoben werden, vorzugsweise in horizontaler Richtung. Das Anzünden der Kerze kann simuliert werden, indem zu Beginn der Schatten 24 vergrößert wird und dann auf die normale Größe gemäß der Position des schattenwerfenden Objektes 8 reduziert wird.

Die Erzeugung des Schattens 24 sollte sich vorzugsweise nicht wiederholen, oder zumindest nicht zu oft oder in zu kurzen Zeitabschnitten wiederholen. Hierfür kann die Position und/oder die Bewegung des schattenwerfenden Objektes 8 oder der schattenwerfenden Objekte 8 zufällig gewählt werden.

Selbstverständlich sind auch Kombinationen der oben genannten Varianten der Schattensimulation möglich. Den verschiedenen Möglichkeiten zur Schattensimulation ist gemein, dass zu bestimmten, vorgegebenen Zeitpunkten ein neues Schattenszenario durch die Sicherheitsvorrichtung 1 über die Ansteuerung der Anordnung 13 der Lichtquellen 2 erzeugt wird. Dabei kann insbesondere die Intensität von Lichtquellen 2 verändert werden, können Lichtquellen 2 aus einer Gruppe 5a, 5b entfernt und/oder hinzugefügt werden, können Gruppen 5a, 5b erzeugt oder entfernt werden und/oder können andere Schatteneffekte erzeugt werden.

## Patentansprüche

1. Verfahren zum Imitieren eines Schattens eines schattenwerfenden Objekts (8) mit einer Sicherheitsvorrichtung (1) mit einer Anordnung (13) mit Lichtquellen (2), **dadurch gekennzeichnet, dass** zur Imitation eines Schattens an einer Wand (21), die von der Sicherheitsvorrichtung (1) angestrahlt wird, die Intensität des abgestrahlten Lichtes zumindest einer Gruppe (5a, 5b) von benachbarten Lichtquellen (2) gegenüber der Intensität des abgestrahlten Lichtes von Lichtquellen (2) der Anordnung (13) außerhalb der zumindest einen Gruppe (5a, 5b) reduziert wird und zur Imitation einer Bewegung des Schattens die Zuordnung der Lichtquellen (2) zu der zumindest einen Gruppe (5a, 5b) geändert wird, indem weitere Lichtquellen (2) der Anordnung (13) zu der zumindest einen Gruppe (5a, 5b) hinzugefügt und/oder Lichtquellen (2) aus der zumindest einen Gruppe (5a, 5b) entfernt werden und dabei die Intensität des abgestrahlten Lichtes der hinzugefügten Lichtquellen (2) reduziert wird und die Intensität der entfernten Lichtquellen (2) erhöht wird.

2. Verfahren nach Anspruch 1, **dadurch gekennzeichnet, dass** als Bewegung ein größer oder kleiner werdender Schatten simuliert wird.

3. Verfahren nach Anspruch 1, **dadurch gekennzeichnet, dass** durch Ändern der Intensität des abgestrahlten Lichtes der Lichtquellen der zumindest einen Gruppe (5a, 5b), ein von einer Kerze erzeugter Schatten simuliert wird.

4. Verfahren nach einem der Ansprüche 1 bis 3, **dadurch gekennzeichnet, dass** ein Schatten berechnet wird, der von einem angenommenen schattenwerfenden Objekt an der Wand erzeugt wird und die zumindest eine Gruppe (5a, 5b) von Lichtquellen (2), die für die Erzeugung des Schattens benötigt werden, angesteuert wird, um die Intensität des abgestrahlten Lichtes der Lichtquellen der zumindest einen Gruppe (5a, 5b) zu reduzieren.

5. Verfahren nach Anspruch 1, **dadurch gekennzeichnet, dass** die Anordnung (13) matrixförmig ist und aus einer Mehrzahl von Spalten (Sm) von Lichtquellen (2) und einer Mehrzahl von Reihen (Rn) von Lichtquellen (2) besteht und der zumindest einen Gruppe (5a, 5b) alle Lichtquellen (2) einer Spalte (Sm) zugeordnet werden.

6. Verfahren nach einem der Ansprüche 1 bis 5, **dadurch gekennzeichnet, dass** die Intensität des abgestrahlten Lichtes der Lichtquellen (2) der zumindest einen Gruppe (5a, 5b) gemäß einer Glockenkurve gesteuert wird, wobei zumindest eine Lichtquelle (2) im Zentrum der Gruppe (5a, 5b) mit der geringsten Intensität abstrahlt und die Intensität des abgestrahlten Lichtes der daran anschließenden Lichtquellen (2) der Gruppe (5a, 5b) gemäß der Glockenkurve verlaufend zunimmt.

7. Verfahren nach einem der Ansprüche 1 bis 6, **dadurch gekennzeichnet, dass** mehrere Lichtquellen (2) der zumindest einen Gruppe (5a, 5b) in der Intensität des abgestrahlten Lichtes gemeinsam und gleich gesteuert werden.

8. Verfahren nach einem der Ansprüche 1 bis 6, **dadurch gekennzeichnet, dass** alle Lichtquellen (2) der zumindest einen Gruppe (5a, 5b) in der Intensität des abgestrahlten Lichtes einzeln und unabhängig voneinander gesteuert werden.

9. Verfahren nach einem der Ansprüche 1 bis 8, **dadurch gekennzeichnet, dass** zusätzlich die Lichtfarbe zumindest einer Lichtquelle (2) der Anordnung (13) gesteuert wird.

10. Verfahren nach einem der Ansprüche 1 bis 9, **dadurch gekennzeichnet, dass** zumindest zwei Sicherheitsvorrichtungen (1) gekoppelt gesteuert werden, um gemeinsam einen Schatten zu simulieren.

11. Sicherheitsvorrichtung zur Imitierung eines Schattens eines schattenwerfenden Objektes (8) mit einer Anordnung (13) mit Lichtquellen (2), die durch eine Steuereinheit (7) der Sicherheitsvorrichtung (1) in der Intensität des abgestrahlten Lichtes steuerbar sind, wobei sich das abgestrahlte Licht der Lichtquellen (2) der Anordnung (13) in einem Abstand zur Sicherheitsvorrichtung (1) an einer angestrahlten Wand (21) zumindest teilweise überlappt, **dadurch gekennzeichnet, dass** die Steuereinheit (7) die Intensität des abgestrahlten Lichtes zumindest einer Gruppe (5a, 5b) von benachbarten Lichtquellen (2) gegenüber der Intensität des abgestrahlten Lichtes von Lichtquellen (2) der Anordnung (13) außerhalb der zumindest einen Gruppe (5a, 5b) reduziert und zur Imitation einer Bewegung des Schattens sich die Zuordnung der Lichtquellen (2) zu der zumindest einen Gruppe (5a, 5b) ändert, indem die Steuereinheit (7) weitere Lichtquellen (2) der Anordnung (13) zu der zumindest einen Gruppe (5a, 5b) hinzufügt und/oder Lichtquellen (2) aus der zumindest einen Gruppe (5a, 5b) entfernt und die Steuereinheit (7) dabei die Intensität des abgestrahlten Lichtes der hinzugefügten Lichtquellen (2) reduziert und die Intensität der entfernten Lichtquellen (2) erhöht.

12. Sicherheitsvorrichtung nach Anspruch 11, **dadurch gekennzeichnet, dass** die Anordnung (13) matrixförmig ist mit einer Mehrzahl von Reihen (Rn) von Lichtquellen (2), wobei in jeder Reihe (Rn) eine Mehrzahl von Lichtquellen (2) angeordnet ist.

13. Sicherheitsvorrichtung nach Anspruch 11, **dadurch gekennzeichnet, dass** die Anordnung (13) matrixförmig ist mit einer Mehrzahl von Reihen (Rn) von Lichtquellen (2) und einer Mehrzahl von Spalten (Sm) von Lichtquellen (2).

14. Sicherheitsvorrichtung nach Anspruch 11, **dadurch gekennzeichnet, dass** die Lichtquellen (2) der Anordnung (13) durch die Steuereinheit (7) einzeln und unabhängig voneinander in der Intensität des abgestrahlten Lichtes steuerbar sind.

15. Sicherheitsvorrichtung nach einem der Ansprüche 11 bis 14, **dadurch gekennzeichnet, dass** einer Lichtquelle (2) oder einer Gruppe von Lichtquellen (2) ein optisches Element (12) zugeordnet ist, um das abgestrahlte Licht der Lichtquelle (2) oder der Gruppe von Lichtquellen (2) zu bündeln oder zu streuen.

16. Sicherheitsvorrichtung nach Anspruch 15, **dadurch gekennzeichnet, dass** das optische Element (12) aus intelligentem Glas gefertigt ist.

## Claims

1. Method for imitating a shadow of a shadow-casting object (8) with a security device (1) having an arrangement (13) with light sources (2), **characterizing in that** the intensity of the radiated light of at least one group (5a, 5b) of adjacent light sources (2) is reduced relative to the intensity of the radiated light from light sources (2) of the arrangement (13) outside of the at least one group (5a, 5b) in order to imitate a shadow on a wall (21) illuminated by the security device (1) and, in order to imitate a movement of the shadow, the assignment of the light sources (2) to the at least one group (5a, 5b) is changed by adding further light sources (2) of the arrangement (13) to the at least one group (5a, 5b) and/or by removing light sources (2) of the at least one group (5a, 5b), whereby the intensity of the radiated light of the added light sources (2) is reduced and the intensity of a removed light sources (2) is increased.

2. Method according to claim 1, **characterized in that** as a movement, a shadow becoming larger or smaller is simulated.

3. Method according to claim 1, **characterized in that** by changing the intensity of the radiated light of the light sources (2) of the at least one group (5a, 5b), a shadow generated by a candle is simulated.

4. Method according to any of the claims 1 to 3, **characterized in that** a shadow is calculated, which is generated by an assumed shadow-casting object on the wall, and the at least one group (5a, 5b) of light sources (2) required for the generation of the shadow is activated to reduce the intensity of the radiated light of the light sources of the at least one group (5a, 5b).

5. Method of claim 1, **characterized in that** the arrangement (13) is matrix-shaped and consists of a plurality of columns (Sm) of light sources (2) and a plurality of rows (Rn) of light sources (2), and all light sources (2) of a column (Sm) are assigned to at least one group (5a, 5b).

6. Method according to any of the claims 1 to 5, **characterized in that** the intensity of the radiated light of the light sources (2) of the at least one group (5a, 5b) is controlled according to a bell curve, wherein at least one light source (2) in the center of the group (5a, 5b) radiates with the lowest intensity and the intensity of the radiated light of the adjoining light sources (2) of the group (5a, 5b) increases according to the bell curve.

7. Method according to any of the claims 1 to 6, **characterized in that** a plurality of light sources (2) of the at least one group (5a, 5b) is controlled together and in the same manner in the intensity of the radiated light.

8. Method according to any of the claims 1 to 6, **characterized in that** all the light sources (2) of the at least one group (5a, 5b) are individually and independently controlled in the intensity of the radiated light.

9. Method according to any of the claims 1 to 8, **characterized in that,** in addition the light color of at least one light source (2) of the arrangement (13) is controlled.

10. Method according to any of the claims 1 to 9, **characterized in that** at least two security devices (1) are coupled to simulate a shadow together.

11. Safety device for imitating a shadow of a shadow-casting object (8) with an arrangement (13) with light sources (2) controllable by a control unit (7) in the intensity of the radiated light, wherein the radiated light of the light sources (2) of the arrangement (13) are at least partially overlapped at a distance from the safety device (1) on an illuminated wall (21), **characterized in that** the control unit (7) reduces the intensity of the radiated light of at least one group (5a, 5b) of adjacent light sources (2) relative to the intensity of the radiated light from light sources (2) of the arrangement (13) outside the at least one group (5a, 5b) and, in order to imitate a movement of the shadow, the assignment of the light sources (2) to the at least one group (5a, 5b) changes, **in that** the control unit (7) adds further light sources (2) of the arrangement (13) to the at least one group (5a, 5b) and/or removes light sources (2) from the at least one group (5a, 5b), whereby the control unit (7) reduces the intensity of the radiated light of the added light sources (2) and increases the intensity of the removed light sources (2).

12. Safety device according to claim 11, **characterized in that** the arrangement (13) is matrix-shaped with a plurality of rows (Rn) of light sources (2), wherein in each row (Rn) is arranged a plurality of light sources (2).

13. Safety device according to claim 11, **characterized in that** the arrangement (13) is matrix-shaped with a plurality of rows (Rn) of light sources (2) and a plurality of columns (Sm) of light sources (2).

14. Safety device according to claim 11, **characterized in that** the light sources (2) of the assembly (13) are individually and independently controllable by the control unit (7) in the intensity of the radiated light.

15. Safety device according to any one of claims 11 to 14, **characterized in that** an optical element (12) is assigned to a light source (2) or a group of light sources (2) in order to bundle or scatter the radiated light of the light source (2) or the group of light sources (2).

16. Safety device according to claim 15, **characterized in that** the optical element (12) is made of intelligent glass.

## Revendications

1. Procédé permettant d'imiter une ombre d'un objet (8) projetant une ombre au moyen d'un dispositif de sécurité (1) comportant une installation (13) pourvue de sources lumineuses (2), **caractérisé en ce que**, pour imiter une ombre sur un mur (21) qui est éclairé par le dispositif de sécurité (1), l'intensité de la lumière émise par au moins un groupe (5a, 5b) de sources lumineuses (2) adjacentes est réduite par rapport à l'intensité de la lumière émise par les sources lumineuses (2) de l'installation (13) en dehors de l'au moins un groupe (5a, 5b) et **en ce que**, pour imiter un mouvement de l'ombre, l'association des sources lumineuses (2) à l'au moins un groupe (5a, 5b) est modifiée en ajoutant des sources lumineuses (2) supplémentaires de l'installation (13) à l'au moins un groupe (5a, 5b) et/ou en supprimant des sources lumineuses (2) de l'au moins un groupe (5a, 5b), ce qui permet de réduire l'intensité de la lumière émise par les sources lumineuses (2) ajoutées et d'augmenter l'intensité des sources lumineuses (2) supprimées.

2. Procédé selon la revendication 1, **caractérisé en ce qu'**une ombre augmentant ou rétrécissant en taille est simulée comme mouvement.

3. Procédé selon la revendication 1, **caractérisé en ce qu**'une ombre générée par une bougie est simulée en modifiant l'intensité de la lumière émise par les sources lumineuses d'au moins un groupe (5a, 5b).

4. Procédé selon l'une des revendications 1 à 3, **caractérisé en ce qu**'une ombre est calculée, laquelle est générée par un objet supposé projetant une ombre sur le mur, et en ce que l'au moins un groupe (5a, 5b) de sources lumineuses (2), lesquelles sont utilisées pour générer l'ombre, est commandé afin de réduire l'intensité de la lumière émise par les sources lumineuses de l'au moins un groupe (5a, 5b).

5. Procédé selon la revendication 1, **caractérisé en ce que** l'installation (13) est conçue sous forme de matrice et est constituée d'une pluralité de colonnes (Sm) de sources lumineuses (2) et d'une pluralité de rangées (Rn) de sources lumineuses (2), et **en ce que** toutes les sources lumineuses (2) d'une colonne (Sm) sont associées à l'au moins un groupe (5a, 5b).

6. Procédé selon l'une des revendications 1 à 5, **caractérisé en ce que** l'intensité de la lumière émise par les sources lumineuses (2) de l'au moins un groupe (5a, 5b) est commandée suivant une courbe de Gauss, au moins une source lumineuse (2) émettant un rayonnement au centre du groupe (5a, 5b) avec l'intensité la plus faible et l'intensité de la lumière émise par les sources lumineuses (2) subséquentes du groupe (5a, 5b) augmentant suivant la courbe de Gauss.

7. Procédé selon l'une des revendications 1 à 6, **caractérisé en ce que** plusieurs sources lumineuses (2) de l'au moins un groupe (5a, 5b) sont commandées conjointement et de manière identique en termes d'intensité de la lumière émise.

8. Procédé selon l'une des revendications 1 à 6, **caractérisé en ce que** toutes les sources lumineuses (2) de l'au moins un groupe (5a, 5b) sont commandées individuellement et indépendamment les unes des autres en termes d'intensité de la lumière émise.

9. Procédé selon l'une des revendications 1 à 8, **caractérisé en ce que** la couleur de lumière d'au moins une source lumineuse (2) de l'installation (13) est également réglée.

10. Procédé selon l'une des revendications 1 à 9, **caractérisé en ce qu**'au moins deux dispositifs de sécurité (1) sont commandés de manière accouplée afin de simuler conjointement une ombre.

11. Dispositif de sécurité permettant d'imiter une ombre d'un objet (8) projetant une ombre, comportant une installation (13) pourvue de sources lumineuses (2), lesquelles peuvent être commandées par une unité de commande (7) du dispositif de sécurité (1) en termes d'intensité de la lumière émise, la lumière émise des sources lumineuses (2) de l'installation (13) se chevauchant au moins partiellement sur un mur éclairé (21) à une certaine distance du dispositif de sécurité (1), **caractérisé en ce que** l'unité de commande (7) réduit l'intensité de la lumière émise par au moins un groupe (5a, 5b) de sources lumineuses (2) adjacentes par rapport à l'intensité de la lumière émise par les sources lumineuses (2) de l'installation (13) en dehors de l'au moins un groupe (5a, 5b), et **en ce que** l'unité de commande (7) modifie, pour imiter un mouvement de l'ombre, l'association des sources lumineuses (2) à l'au moins un groupe (5a, 5b) en ajoutant des sources lumineuses (2) supplémentaires de l'installation (13) à l'au moins un groupe (5a, 5b) et/ou en supprimant des sources lumineuses (2) de l'au moins un groupe (5a, 5b), ce qui permet à l'unité de commande (7) de réduire l'intensité de la lumière émise par les sources lumineuses ajoutées (2) et d'augmenter l'intensité des sources lumineuses (2) supprimées.

12. Dispositif de sécurité selon la revendication 11, **caractérisé en ce que** l'installation (13) est conçue sous forme de matrice à plusieurs rangées (Rn) de sources lumineuses (2), une pluralité de sources lumineuses (2) étant disposée dans chaque rangée (Rn).

13. Dispositif de sécurité selon la revendication 11, **caractérisé en ce que** l'installation (13) est conçue sous forme de matrice à plusieurs rangées (Rn) de sources lumineuses (2) et plusieurs colonnes (Sm) de sources lumineuses (2).

14. Dispositif de sécurité selon la revendication 11, **caractérisé en ce que** les sources lumineuses (2) de l'installation (13) peuvent être commandées individuellement et indépendamment les unes des autres par l'unité de commande (7) en termes d'intensité de la lumière émise.

15. Dispositif de sécurité selon l'une des revendications 11 à 14, **caractérisé en ce qu**'un élément optique (12) est associé à une source lumineuse (2) ou à un groupe de sources lumineuses (2) afin de regrouper ou de diffuser la lumière émise par la source lumineuse (2) ou par le groupe de sources lumineuses (2).

16. Dispositif de sécurité selon la revendication 15, **caractérisé en ce que** l'élément optique (12) est en verre intelligent.
